(19) Europäisches Patentamt
European Patent Office
Office européen des brevets

(11) Veröffentlichungsnummer: **0 355 676 B1**

(12) **EUROPÄISCHE PATENTSCHRIFT**

(45) Veröffentlichungstag der Patentschrift: **28.04.93**

(51) Int. Cl.[5]: **C09D 5/03**, C08F 220/34

(21) Anmeldenummer: **89115063.3**

(22) Anmeldetag: **16.08.89**

# (54) Verwendung von Copolymeren von langkettigen Alkylacrylaten mit N-haltigen Olefinen als Verlaufmittel für Pulverlacke.

(30) Priorität: **25.08.88 DE 3828876**

(43) Veröffentlichungstag der Anmeldung:
**28.02.90 Patentblatt 90/09**

(45) Bekanntmachung des Hinweises auf die Patenterteilung:
**28.04.93 Patentblatt 93/17**

(84) Benannte Vertragsstaaten:
**AT BE CH DE ES FR GB IT LI NL SE**

(56) Entgegenhaltungen:
**DE-B- 1 251 955**

**CHEMICAL ABSTRACTS, Band 101, Nr. 12, September 1984, Seite 16, Zusammenfassung Nr. 91676t, Columbus, Ohio, US; & SU-A-342 864 (SECTOR OF RADIATION RESEARCH, ACADEMY OF SCIENCES, AZERBAIDZHAN S.S.R.) 15-04-1984**

(73) Patentinhaber: **Henkel Kommanditgesellschaft auf Aktien**
**Postfach 1100 Henkelstrasse 67**
**W-4000 Düsseldorf 1(DE)**

(72) Erfinder: **Oberkobusch, Doris, Dr.**
**Seidenweg 43**
**W-4000 Düsseldorf 13(DE)**
Erfinder: **Gress, Wolfgang**
**Westfalenweg 247**
**W-5600 Wuppertal-Elberfeld(DE)**
Erfinder: **Wegemund, Bernd, Dr.**
**Händelweg 3**
**W-5657 Haan 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Lösemittelarme bzw. lösemittelfreie Anstrichsysteme gewinnen zunehmend an Bedeutung. Zu der Gruppe dieser Anstrichsysteme gehören die sogenannten Pulverlacke, d. h. lösemittelfreie pulverförmige Anstrichstoffe, die in der Regel durch elektrostatische Applikation auf Substrate aufgebracht und bei höheren Temperaturen ausgehärtet werden. Voraussetzung für die geschilderte Technik ist das Vorliegen sämtlicher Komponenten in Pulverform.

Zur Erzielung einwandfreier Oberflächen mit Pulverlacken werden diesen sogenannte Verlaufmittel zugesetzt. Dabei handelt es sich im allgemeinen um flüssige Produkte auf Polyacrylatbasis, die grundsätzlich auf zwei verschiedene Arten in die Pulverlacke eingearbeitet werden, und zwar

1. in Form eines sogenannten "Master-Batch", wobei das flüssige Verlaufmittel in die Bindemittelkomponente des Pulverlackes eingeschmolzen wird; die erstarrte Schmelze wird anschließend gebrochen und für die weitere Verarbeitung konfektioniert;

2. als auf einem inerten Träger, z. B. Kieselgel, aufgezogene Flüssigkeit.

Nachteil der Master-Batch-Technologie ist, daß man in der Formulierung von Pulverlacken eingeschränkt ist, da des Bindemittel des Master-Batch mit dem Hauptbindemittel der Formulierung identisch oder mindestens verträglich sein muß. Auf einen Träger aufgezogene Verlaufmittel können zu einer Glanzverminderung des Lackes und einer Beeinträchtigung der Transparenz bei Pulverlacken sowie unter ungünstigen Umständen zu einer Herabsetzung der Lagerstabilität des Pulverlackes führen.

Die Erfindung ist auf feste, pulverförmige Verlaufmittel gerichtet, die weder einen inerten Träger noch ein Einarbeiten im Master-Batch-Verfahren erfordern, wodurch sich die vorstehend genannten Nachteile vermeiden lassen.

Die vorliegende Erfindung ist uf übliche Typen von Pulverlacken anwendbar, wie sie in Ullmann's Enzyklopädie der technischen Chemie, 4. Auflage, Band 15, Seite 660 - 664, Verlag Chemie Weinheim (1978), beschrieben sind; auf den Inhalt der genannten Veröffentlichung wird ausdrücklich Bezug genommen. Der Gegenstand der Erfindung ist insbesondere geeignet für sogenannte Elektrostatikpulver auf Basis von Epoxidharzen, gesättigten Polyesterharzen und Polyacrylaten, vgl. a.a.O., Seiten 660 - 661, Nr. 3.4.1.

Die vorstehend genannte Aufgabe wird erfindungsgemäß dadurch gelöst, daß man Copolymere verwendet, die erhältlich sind durch Copolymerisation von

a) Acrylaten der Formel I

$CH_2 = CR^1\text{-}CO\text{-}OR^2$ (I)

in der $R^1$ ein Wasserstoffatom oder eine Methylgruppe und $OR^2$ der Rest eines Fettalkohols mit 16 bis 34 Kohlenstoffatomen bedeuten, mit

N-haltigen Olefinen

$b_1$) der Formel II

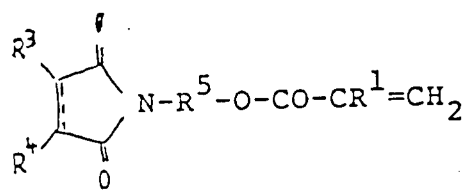

(II)

in der $R^3$ und/oder $R^4$ Wasserstoff oder $C_1$-$C_4$-Alkylgruppen sind oder zusammen einen gegebenenfalls aromatischen und gegebenenfalls mit $C_1$-$C_4$-Alkyl substituierten $C_5$- oder $C_6$-Ring bilden können,

$R^5$ eine geradkettige oder verzweigte Alkylengruppe mit 1 bis 12 Kohlenstoffatomen, die einen OH- oder $NH_2$-Substituenten oder das Strukturelement $-CH_2\text{-}CH_2\text{-}O\text{-}CH_2\text{-}CH_2-$ bzw. $-CH_2\text{-}CH_2\text{-}NH\text{-}CH_2\text{-}CH_2-$ (sofern 4 oder mehr als 4 Kohlenstoffatome vorhanden sind) oder auch eine cyclische $C_5$- oder $C_6$-Alkylgruppe aufweisen kann oder eine gegebenenfalls $C_1$-$C_4$-Alkylen-substituierte Phenylengruppe ist, und $R^1$ wie oben definiert ist, wobei die Bindung

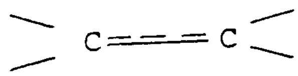

hydriert sein kann,

und/oder

$b_2$) der Formel III

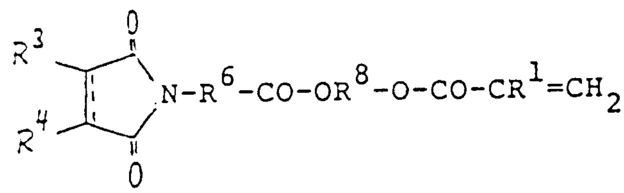

(III)

in der

$R^1$, $R^3$ und $R^4$ wie oben definiert sind,

$R^6$ einen Phenylenrest oder eine Alkylengruppe der Formel

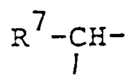

in der $R^7$ ein Wasserstoffatom oder ein gegebenenfalls verzweigter Alkylrest mit 1 bis 11 Kohlenstoffatomen ist, und

$R^8$ eine $C_2$-$C_{10}$-Alkylengruppe sowie die Bindung

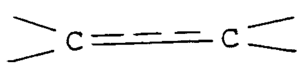

hydriert sein kann,

bedeuten,

und/oder

$b_3$) der Formel IV

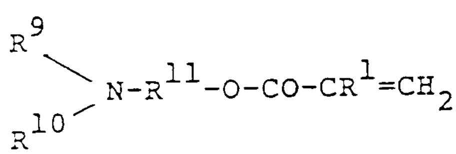

(IV)

in der

$R^1$ wie oben definiert ist, $R^9$ eine Phenyl- oder Benzylgruppe, $R^{10}$ eine $C_1$-$C_6$-Alkylgruppe und $R^{11}$ eine $C_2$-$C_6$-Alkylengruppe,

oder

$R^9$ und $R^{10}$ $C_1$-$C_{16}$-Alkylgruppen und $R^{11}$ eine Phenylengruppe bedeuten,

und/oder

$b_4$) der Formel V

$R^{12}$-CO-NH-$R^{13}$-O-CO-$CR^1 = CH_2$ (V)

in der $R^{12}$ eine $C_7$-$C_{33}$-, insbesondere $C_{15}$-$C_{23}$-Alkylgruppe und $R^{13}$ eine $C_2$-$C_4$-Alkylengruppe bedeuten und $R^1$ wie oben definiert ist,

in Molverhältnissen von I zu II, III, IV bzw. V von 1 : 0,5 bis 1 : 10, vorzugsweise 1 : 2 bis 1 : 5, in

Anwesenheit von inerten organischen Lösemitteln und radikalischen Polymerisationsinitiatoren.

In der Copolymerisation können einzelne Olefine der Formeln II bis V oder auch Gemische dieser Olefine eingesetzt werden. Entsprechend ihrem Bestimmungszweck sollen die Copolymeren bei Umgebungstemperatur fest sein und Erweichungspunkte aufweisen, die vorzugsweise mindestens 40°C aufweisen. Dem Polymerfachmann sind, wenn ein Copolymer diese Bedingung nicht erfüllen sollte, geeignete Maßnahmen zur Erhöhung der Erweichungspunkte geläufig, z. B. durch Veränderung der Verhältnisse von Acrylaten und N-haltigen Olefinen, der Polymerisationsbedingungen und dergleichen.

Die Acrylate der Formel I stellen Fettsäureester der Acrylsäure und Methacrylsäure dar; bevorzugt sind die Derivate der Acrylsäure.

Die Alkoholkomponente der Acrylate der Formel I wird von Alkoholen mit 16 bis 34 Kohlenstoffatomen gebildet, insbesondere Cetyl-, Stearyl-, Arachidyl-, Behenyl- und Lignocerylalkohol, wobei speziell technische $C_{18}/C_{22}$-Fettalkoholgemische mit Behenylalkoholgehalten von über 40 % bis über 70 % besonders bevorzugt sind.

In den Acrylaten der Formel II ist $R^1$ wie oben definiert, vorzugsweise Wasserstoff. Die Gruppen $R^3$ und $R^4$ bedeuten Wasserstoff oder $C_1$-$C_4$-Alkylgruppen wie Methyl, Ethyl, n-Propyl, i-Propyl, n-Butyl, s-Butyl und t-Butyl; sie können auch zusammen einen aromatischen oder nicht-aromatischen, gegebenenfalls mit $C_1$-$C_4$-Alkyl der obigen Bedeutungen substituierten $C_5$- oder $C_6$-Ring bilden. Die Gruppe

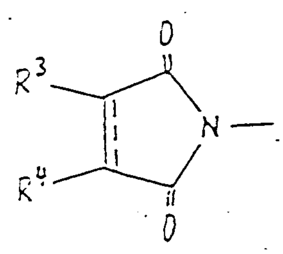

der N-haltigen Olefine gemäß Formel II wie auch derjenigen der Formel III ist bevorzugt aus der von Resten von Phthalimid, Tetrahydro-phthalimid, Methyl-tetrahydrophthalimid, Methylhexahydro-phthalimid,Maleinimid und Succinimid gebildeten Gruppe ausgewählt; spezielle Beispiele sind für Phthalsäurederivate neben Phthalimid und Hexahydro-phthalimid 1,2,3,6-Tetrahydro-phthalimid, 4-Methyl-1,2,3,6-tetrahydro-phthalimid und 4-Methylhexahydro-phthalimid.

Die Gruppe $R^5$ in der Formel II stellt eine geradkettige oder verzweigte Alkylengruppe mit 1 bis 12, insbesondere 1 bis 6, Kohlenstoffatomen dar, insbesondere Ethylen, Propylen, Butylen, Pentylen, Hexylen, Octylen, Decylen und Dodecylen; bevorzugt sind die vorgenannten Alkylengruppen mit 1 bis 6 Kohlenstoffatomen. Die Gruppe $R^5$ kann weiterhin Phenylen oder $C_1$-$C_4$-Alkylen-substituiertes Phenylen, insbesondere Methylenphenylen, sein.

N-Acrylate der Formel II werden bevorzugt erhalten, indem man die entsprechenden cyclischen Anhydride der Formel

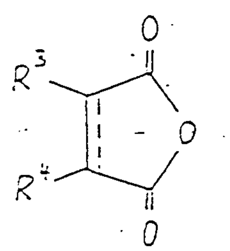

mit Aminoalkoholen der Formel

$H_2N$-$R^5$-OH

umsetzt, insbesondere mit Aminoethanol, omega-Amino-propanol, -butanol, -pentanol, -hexanol, -octanol, -decanol, -dodecanol, 1-Amino-2-propanol, 4-Hydroxyethyl- oder 4-Hydroxymethylanilin, 4-Aminocyclohexanol. Anschließend erfolgt die Umsetzung der freien OH-Gruppe der so erhaltenen Verbindungen mit Acryl-

oder Methacrylsäure bzw. reaktiven Derivaten derselben mittels üblicher Methoden.

Weitere bei dieser Reaktion einsetzbare Aminoalkohole sind z. B. 1-Amino-2-hydroxypropan, 2-Amino-1-hydroxypropan, 2-Amino-2'-hydroxy-dieethylether, 2-Amino-2'-hydroxy-diethylamin und 2-Amino-1-hydroxybutan sowie 1-Amino-2,2-dimethyl-3-hydroxypropan.

Eine weitere Methode zur Herstellung N-haltiger Olefine der allgemeinen Formel II besteht darin, daß man von den entsprechenden N-unsubstituierten cyclischen Imiden ausgeht und diese mit Formaldehyd umsetzt; die erhaltenen N-Hydroxymethylverbindungen lassen sich anschließend mit reaktiven Derivaten der Acrylsäure und Methacrylsäure in üblicher Weise verestern.

In den N-haltigen Olefinen der Formel III, in der $R^1$, $R^3$ und $R^4$ sowie der cyclische Imidrest wie oben definiert sind, bedeutet die Gruppe $R^6$ einen Phenylenrest oder eine Alkylengruppe mit 1 bis 12 Kohlenstoffatomen mit der Maßgabe, daß der Alkylenrest die Struktur

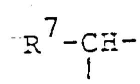

aufweist, wobei $R^7$ ein Wasserstoffatom oder ein gegebenenfalls verzweigter Alkylrest mit 1 bis 11 Kohlenstoffatomen ist. Bevorzugt sind hier Verbindungen, in denen der Rest $R^6$ eine Methylengruppe oder eine $C_1$-$C_5$-mono-alkylsubstituierte Methylengruppe ist. Die Bedeutungen des $C_1$-$C_5$-Alkylsubstituenten sind die gleichen wie oben für $C_1$-$C_4$ angegeben, jedoch einschließlich Pentyl.

Die N-haltigen Olefine der Formel III können erhalten werden, indem man die entsprechenden cyclischen Anhydride zunächst mit Aminosäuren der allgemeinen Formel

$H_2N$-$R^6$-COOH

umsetzt. Geeignete Aminosäuren sind Glycin, Alanin, Valin, Leucin, Isoleucin, Phenylalanin, Caprolactam und dergleichen, wobei Glycin bevorzugt ist. Eine weitere geeignete Aminosäure ist 4-Aminobenzoesäure. Die so erhaltenen Imidocarbonsäuren können anschließend in üblicher Weise mit Hydroxy-$C_2$-$C_{10}$-,insbesondere $C_2$-$C_4$-alkylacrylaten und -methacrylaten umgesetzt werden; besonders bevorzugt ist hier die Umsetzung mit den Hydroxyethyl-Derivaten der vorgenannten Acrylsäuren.

In den N-haltigen Olefinen der Formel IV ist $R^9$ eine Phenyl- oder Benzylgruppe, $R^{10}$ eine $C_1$-$C_{16}$-Alkylgruppe, vorzugsweise eine $C_1$-$C_4$-Alkylgruppe und $R^{11}$ eine $C_2$-$C_6$-Alkylengruppe, insbesondere eine $C_2$-$C_4$-Alkylengruppe. Alternativ können $R^9$ und $R^{10}$ auch $C_1$-$C_{16}$-Alkylgruppen, vorzugsweise $C_1$-$C_4$-Alkylgruppen, mit den obigen Bedeutungen und $R^{11}$ eine Phenylengruppe sein.

Die N-haltigen Olefine der Formel IV können erhalten werden, indem man Hydroxyalkylamine der Formel

$R^9R^{10}N$-$R^{11}$-OH

mit Acryl- oder Methacrylsäuren, -estern oder reaktiven Derivaten der Säuren in üblicher Weise umsetzt. Als besonders vorteilhafte Hydroxyalkylamine werden hier solche eingesetzt, in denen $R^9$ eine Phenyl- oder Benzylgruppe, $R^{10}$ eine $C_1$-$C_4$-Alkylgruppe und die Hydroxyalkylgruppe 2 bis 4 Kohlenstoffatome aufweist; alternativ können $R^9$ und $R^{10}$ $C_1$-$C_4$-Alkylgruppen sein, wobei an die Stelle der Hydroxyalkylgruppe eine Hydroxyphenylgruppe tritt.

Besonders bevorzugte Vertreter der N-haltigen Olefine der Formel IV sind solche, in denen $R^9$ Benzyl oder Phenyl, $R^{10}$ Methyl oder Ethyl und $R^{11}$ Alkylenreste mit 2 bis 6 Kohlenstoffatomen sind. Sie werden ausgehend von den folgenden Hydroxyalkylaminen erhalten:
N-Benzyl-N-methyl-hydroxy-ethylamin, -propylamin, -butylamin, -pentylamin, -hexylamin sowie den entsprechenden N-Benzyl-N-ethyl-, N-Phenyl-N-methyl- und N-Phenyl-N-ethyl-N-hydroxyalkylaminen.

In den N-haltigen Olefinen der Formel V ist $R^{12}$ eine $C_7$-$C_{33}$-Alkylgruppe, insbesondere eine $C_{15}$-$C_{23}$-Alkylgruppe. Der Rest $R^{12}$-CO ist somit der Rest einer $C_8$-$C_{34}$-, insbesondere $C_{16}$-$C_{24}$-Fettsäure, bzw. eines technischen Gemisches derselben natürlichen, z.B. pflanzlichen, tierischen oder seetierischen, oder synthetischen Ursprungs. Typische Beispiele für derartige Fettsäuren sind Capryl-, Caprin-, Laurin-, Myristin-, Palmitin-, Stearin-, Arachin-, Behen- und Montansäure, weiterhin Laurolein-, Myristolein-, Palmitolein-, Öl- und Erucasäure. Die N-haltigen Olefine der Formel VI können erhalten werden, indem man die entsprechenden Fettsäuren bzw. Fettsäuregemische mit $C_2$-$C_4$-Alkanolaminen zu den entsprechenden Fettsäurealkanolamiden umsetzt und die Hydroxylfunktion in üblicher Weise mit reaktiven Derivaten der Acryl- oder

Methacrylsäure acyliert.

Die Umsetzung der Acrylate der Formel I mit den N-haltigen Olefinen II, III, IV und V erfolgt in Gegenwart von inerten organischen Lösemitteln wie Xylol, Tetralin und anderen höher siedenden Lösemitteln, z.B. aromatenreichen Lösemitteln, wie Solvesso 200, sowie in Anwesenheit von radikalischen Polymerisationsinitiatoren, die für die Copolymerisation von Acrylaten üblich sind, vgl. Kirk-Othmer, Band 13, 1981, Seiten 355 bis 373; ein bevorzugter Initiator ist z. B. Azo-isobutyro-dinitril (AIBN). Üblicherweise erfolgt die Copolymerisation bei Temperaturen von etwa 80 bis 100°C.

Als weiterhin besonders vorteilhaft haben sich Copolymere der eingangs genannten Art erwiesen, die durch Copolymerisation von Acrylaten der Formel VI

$CH_2 = CH\text{-}CO\text{-}OR^{15}$ (VI)

in der $OR^{15}$ der Rest eines Fettalkohols mit 16 bis 24 Kohlenstoffatomen, insbesondere eines technischen Fettalkoholgemisches, das reich an Behenylalkohol ist (Behenylalkoholgehalt von mehr als 40 bis mehr als 70 %), mit einem N-haltigen Olefin der Formel VII

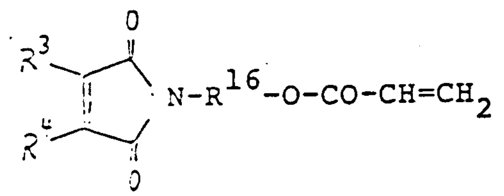

(VII)

in der die Gruppe

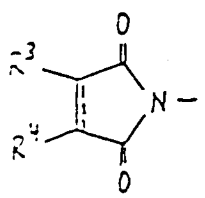

bzw. die Substituenten $R^3$ und $R^4$ wie oben definiert sind und $R^{16}$ ein Alkylenrest mit 2 bis 8, insbesondere 2 bis 3 Kohlenstoffatomen ist, in Molverhältnissen der Verbindungen VI zu VII von 1 : 0,5 bis 1 : 10. Als weiterhin vorteilhaft erwiesen haben sich Copolymere der eingangs genannten Art, die durch Copolymerisation eines Acrylats der Formel VI, in der die Gruppe $OR^{15}$ der Rest eines Fettalkohols mit 16 bis 24 Kohlenstoffatomen ist, insbesondere ein technisches Fettalkoholgemisch, das reich an Behenylalkohol ist (Behenylgehalt von mehr als 40 bis mehr als 70 %), mit einem N-haltigen Olefin der Formel VIII

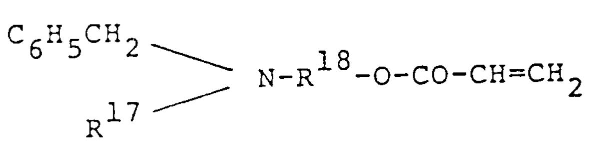

(VIII)

in der $R^{17}$ eine $C_1$-$C_4$-Alkylgruppe und $R^{18}$ eine Ethylengruppe ist, in Molverhältnissen der Verbindungen VI zu VIII von 1 : 0,5 bis 1 : 10.

Die Erfindung betrifft weiterhin Pulverlacke, enthaltend thermoplastische oder duromere Kunstharze und, bezogen auf Gesamtgewicht der Pulverlacke, 0,1 bis 2,0 Gew.-% eines oder mehrerer der erfindungsgemäß zu verwendenden Copolymeren sowie gegebenenfalls übliche Additive wie Härtungsmittel, Härtungsbeschleuniger, Pigmente und UV-Stabilisatoren. Besonders bevorzugt sind Pulverlacke auf Basis von Epoxiden für die Vernetzung mit Dicyandiamiden sowie von carboxylfunktionellen Polyestern für die Vernetzung mit Triglycidylisocyanuraten.

Die Herstellung der erfindungsgemäß zu verwendenden Copolymerisate wird im folgenden anhand von bevorzugten Ausführungsbeispielen näher erläutert.

1. Herstellung von N-haltigen Olefinen der allgemeinen Formeln II, III, IV, und V (Ausgangsverbindungen für die Copolymerisation = N-haltige Olefine A bis M).

In der nachfolgenden Tabelle 1 sind hergestellte N-haltige Olefine A bis H zusammen mit ihren Ausgangsverbindungen und physikalischen Kenndaten zusammengefaßt. Sie wurden ausgehend von den entsprechenden Anhydriden in einer zweistufigen Synthese über die Hydroxyimide nach folgender allgemeiner Arbeitsvorschrift erhalten:

a) Hydroxyimid-Synthese

Zu 1 mol des jeweiligen Anhydrids in 400 ml Xylol wurde 1 mol des Aminoalkohols langsam zugetropft, wobei sich das Gemisch erwärmte. Nach Ende der Zugabe wurde auf 170°C erhitzt und das Reaktionswasser azeotrop am Wasserabscheider abdestilliert. Nach ca. 3 Stunden war die Wasserabspaltung beendet. Das Produkt konnte durch Entfernung des Lösemittels isoliert oder direkt in Lösung weiter umgesetzt werden.

Tabelle 1.

N-haltige Olefine aus Anhydriden, Aminoalkoholen und Acrylsäure

| Anhydrid | Hydroxyimid-Synthese Aminoalkohol | Ausbeute[1] % | Smp. °C | OHZ[2] | Umsetzung mit Acrylsäure Produkt | Ausbeute % | Smp. °C | N-Olefin |
|---|---|---|---|---|---|---|---|---|
| Phthalsäure-anhydrid | 2-Aminoethanol | 98 | 127 | - | (Phthalimido-N-ethyl)-acrylat | 92 | 105 | A |
| Tetrahydrophthal-säureanhydrid | dto. | 100 | 70 | - | (Tetrahydrophthalimido-(N-ethyl)-acrylat | 89 | flüssig | B |
| 4-Methylhexahydro-phthalsäureanhydrid | dto. | 98 | - | 259 | (4-Methylhexahydro-phthalimido-N-ethyl) acrylat | 91 | flüssig | C |
| Bernsteinsäure-anhydrid | dto. | 97 | 60 | | (Succimido-N-ethyl)-acrylat | 50 | | D |
| Phthalsäure-anhydrid | 1-Aminopropanol-2 | 97 | 88 | | (Phthalimido-N-isopro-pyl)-acrylat | 85 | 65 | E |
| dto. | 2-(4-Aminophenyl)-ethanol | 94 | | 201 | [Phthalimido-N-(4-ethyl-phenyl)]-acrylat | 89 | 105 | F |
| 4-Methylhexahydro-phthalsäure-anhydrid | 6-Aminohexanol-(1) | 100 | | 201,5 | (4-Methylhexahydro-phthalimido-N-hexyl)-acrylat | 90 | flüssig | G |
| Bernsteinsäure-anhydrid | dto. | 96 | | 252 | (Succinimido-N-hexyl)-acrylat | 74 | | H |

1) berechnet nach aufgefangenem Reaktionswasser
2) OHZ - Hydroxylzahl in mg KOH/g Substanz

b) Umsetzung der oben erhaltenen Hydroxyimide mit Acrylsäure zu den N-haltigen Olefinen A bis H.

1 mol des jeweiligen Hydroxyimids wurde mit 1 mol Acrylsäure in 200 ml Xylol unter Zugabe von 1 g Hydrochinonmonomethylether und 1 g konzentrierter Schwefelsäure am Wasserabscheider auf ca. 140 bis 150°C erhitzt, bis annähernd die theoretische Wassermenge abgespalten war. Das Produkt konnte direkt zur Polymerisation eingesetzt oder nach dem Waschen mit Wasser und Hydrogencarbonatlösung sowie

Entfernung des Xylols isoliert werden.

2. Herstellung weiterer N-haltiger Olefine I, J, K, L und M.

(Phthalimido-N-methyl)acrylat (I).

100 g Phthalimid (0,68 mol) wurden mit 88 ml 37prozentiger Formaldehydlösung und 190 ml destilliertem Wasser versetzt und 4 Stunden bei 98°C gerührt. Die leicht trübe Lösung wurde heiß filtriert. Beim Abkühlen fiel das Zwischenprodukt (N-Hydroxymethyl)-phthalimid als weißer kristalliner Feststoff aus. Smp. 104°C.

Zur Herstellung der Titelverbindung wurden 1 mol (N-Hydroxymethyl)-phthalimid und 1 mol Acrylsäure in 600 ml Xylol gegeben und nach Zusatz von 1 g Hydrochinonmonomethylether und 1 g konzentrierter Schwefelsäure bei ca. 140°C verestert, bis kein Reaktionswasser mehr entstand.

Das nach Entfernung des Lösemittels zurückbleibende Produkt wies einen Smp. von 115°C auf.

Phthalimido-N-(methylcarboxyethyl)-acrylat (J).

N-(Phthaloylglycin):

1 mol Phthalsäureanhydrid, 1 mol Glycin und 0,1 mol Triethylamin wurden in 200 ml Toluol am Wasserabscheider auf ca. 110 bis 130°C erhitzt. Dabei spalteten sich innerhalb von 3 Stunden ca. 95 % der theoretischen Wassermenge ab. Das Lösemittel wurde bei maximal 140°C im Vakuum entfernt. Der feste Rückstand wurde in 300 ml 0,5 n HCl aufgeschlämmt, abgesaugt, mehrmals mit Wasser gewaschen und getrocknet. Man erhielt ein weißes Produkt, Smp. 190°C.

Umsetzung von N-Phthaloylglycin zum N-haltigen Olefin J.

41,0 g (0,2 mol) N-Phthaloylglycin und 69,6 g (0,6 mol) Hydroxyethylacrylat wurden in 200 ml Toluol unter Zugabe von 0,6 g Hydrochinonmonomethylether und 0,6 g konzentrierter Schwefelsäure am Wasserabscheider erhitzt; die Innentemperatur betrug 110 bis 130°C. Nach Abspaltung von 3,5 g Wasser (theor. 3,6 g), was einem Umsatz von ca. 97 % entspricht, wurde die Reaktion abgebrochen (nach ca. 3,5 Stunden). Nach Verdünnen mit weiteren 200 ml Toluol wurde das überschüssige Hydroxyethylacrylat durch Waschen mit Wasser entfernt. Das Reaktionsgemisch wurde anschließend mit Hydrogencarbonat entsäuert und das Lösemittel entfernt, wobei das Produkt als gelbliches Öl anfiel (OH-Zahl 0, Restsäurezahl = 8 (jeweils mg KOH/g Substanz).

Phthalimido-N-(methylcarboxypropyl)-methacrylat (K).

1 mol Phthaloylglycin und 1 mol Hydroxypropylmethacrylat wurden in 400 ml Toluol nach Zusatz von 1 g Hydrochinonmonomethylether und 1 g konzentrierter Schwefelsäure am Wasserabscheider erhitzt, bis annähernd die theoretische Wassermenge abgespalten war. Die Toluollösung wurde mit Wasser gewaschen; das Toluol wurde im Vakuum abgezogen.

$C_{16/18}$-Fettsäureamido-ethylacrylat (L).

$C_{16/18}$-Fettsäuremonoethanolamid.

0,5 mol $C_{16/18}$-Fettsäuremethylester und 1 mol 2-(Methylamino)-ethanol wurden vermischt, mit 1 % Zinnpulver versetzt und 6 Stunden auf 150°C erhitzt. Dabei wurden ca. 80 % der theoretischen Methanolmenge abgespalten. Anschließend wurde die Badtemperatur auf 200°C erhöht und 30 Minuten Vakuum angelegt, um restliches Methanol sowie überschüssigen Aminoalkohol zu entfernen. Man erhielt ein Produkt mit einem Schmelzpunkt von 40°C.

$C_{16/18}$-Fettsäureamidoethylacrylat:

1 mol Acrylsäure und 1 mol des zuvor hergestellten $C_{16/18}$-Fettsäuremonoethanolamids wurden zusammen mit 1 g Hydrochinonmonomethylether und 1 g konzentrierter Schwefelsäure in 300 ml Toluol gegeben und ca. 12 Stunden bei 140°C verestert. Anschließend wurde die Lösung filtriert und das Toluol im Vakuum abgezogen. Das erhaltenen Produkt wies eine Rest-OH-Zahl von 15 und eine Restsäurezahl von 11 auf.

Herstellung von N-Benzyl-N-methylaminoethylacrylat (M).

247,9 g (1,5 mol) N-Benzyl-N-methylethanolamin (handelsüblich) und 126,0 g (1,75 mol) Acrylsäure wurden in 300 ml Xylol unter Zugabe von 1,5 g Hydrochinonmonomethylether und 1,5 g konzentrierter Schwefelsäure am Wasserabscheider erhitzt. Nach 6 Stunden hatten sich 27 g Wasser abgespalten, was einer quantitativen Umsetzung entsprach. Gegen Ende der Reaktion wurde die Innentemperatur durch Xylolentnahme bis auf 170°Cgesteigert. Nach üblicher Aufarbeitung resultierte ein gelbbraunes, dünnflüssiges Öl mit einer OH-Zahl von 6,5 und einer Säurezahl von 9 mg KOH/g.

3. Herstellung der erfindungsgemäß zu verwendenen Copolymerisate.

Die herstellten Copolymerisate sind in den nachfolgenden Tabellen 2 bis 9 zusammengefaßt.

Beispiel 1.

Copolymeres aus (Phthalimido-N-ethyl)acrylat (N-haltiges Olefin A) und Behenylacrylat (ca. 70 % $C_{22}$-Gehalt).

24,5 g (0,1 mol) Phthalimido-N-ethyl)acrylat und 37,5 g (0,1 mol) Behenylacrylat wurden in 37,5 g Xylol auf 80°C erhitzt. Anschließend wurden innerhalb einer Stunde 0,46 g (2,8 x $10^{-3}$ mol) Azo-bis-isobutyronitril (AIBN) in 24,5 g Xylol zugegeben. Daran schloß sich eine Nachreaktionszeit von 2 Stunden bei 100°C an.

Beispiele 2 bis 15, 22 bis 31

Die Herstellung dieser Copolymere erfolgt analog zu der in Beispiel 1 angegebenen Arbeitsweise.

Beispiele 16 bis 21.

Die Herstellung der Copolymerisate der Erfindung gemäß diesen Beispielen wird im folgenden anhand derjenigen für das Beispiel 17, zu der sie analog ist, erläutert:
Herstellung des (Phthalimido-N-ethyl)-acrylat-behenylacrylat-Polymeren (Monomeren-Zulaufverfahren).

Eine Lösung von 2,45 g (0,01 mol) (Phthalimido-N-ethyl)-acrylat und 3,75 g (0,01 mol) Behenylacrylat in 3,75 g Xylol (= 10 % der Monomerenmischung) wurden innerhalb von 6 Minuten bei 80°C mit 0,046 AIBN in 2,45 g Xylol (= 10 % der Starterlösung) versetzt.

Innerhalb von 54 Minuten wurden anschließend bei gleicher Temperatur eine 80°C heiße Lösung von 22,5 g (0,09 mol) (Phthalimido-N-ethyl)-acrylat und 33,75 g (0,09 mol) Behenylacrylat in 33,75 g Xylol und eine Lösung von 0,414 g AIBN in 22,05 g Xylol synchron zudosiert. Daran schloß sich eine Nachreaktionszeit von 2 Stunden bei 100°C an.

Der Herstellung der übrigen nach dem Monomeren-Zulaufverfahren synthetisierten Copolymeren erfolgt analog unter Einsatz der jeweils in den Tabellen angegebenen Molverhältnisse.

Tabelle 2

Copolymerisate in Xylol bei 80°C, Eintopfverfahren, Starter AIBN zudosiert.

| | Monomere | | | | Copolymerisat |
|---|---|---|---|---|---|
| Beispiel | N-haltiges Olefin | mol | Fettalkohol-Acrylat | mol | Spezifische Viskosität 10 %-ig in Xylol, 25°C |
| 1 | A | 1 | Behenylacrylat (~70 % $C_{22}$) | 1 | 2,68 |
| 2 | E | 1 | dto. | 1 | 0,84 |
| 3 | C | 1 | dto. | 1 | 0,83 |
| 4 | G | 1 | dto. | 1 | 0,90 |
| 5 | D | 1 | dto. | 1 | 0,91 |
| 6 | H | 1 | dto. | 1 | 0,76 |
| 7 | B | 1 | dto. | 1 | 1,03 |
| 8 | I | 1 | dto. | 1 | 1,04 |
| 9 | F | 1 | dto. | 1 | 1,06 |

Tabelle 3

Copolymerisation in Xylol bei 80°C, Eintopfverfahren, Starter AIBN zudosiert.

| | Monomere | | | | Copolymerisat |
|---|---|---|---|---|---|
| Beispiel | N-haltiges Olefin | mol | Fettalkohol-Acrylat | mol | Spezifische Viskosität 10 %-ig in Xylol, 25°C |
| 10 | L | 1 | Behenylacrylat (~45 % $C_{22}$) | 1 | 0,62 |
| 11 | L | 1 | dto. | 0,5 | 0,54 |

Tabelle 4

Copolymerisate in Xylol bei 80°C, Eintopfverfahren, Starter AIBN zudosiert.

| | Monomere | | | | Copolymerisat |
|---|---|---|---|---|---|
| Beispiel | N-haltiges Olefin | mol | Fettalkohol-Acrylat | mol | Spezifische Viskosität 10 %-ig in Xylol, 25°C |
| 12 | A | 0,66 | Behenylacrylat (~ 70 % $C_{22}$) | 1 | 4,02 |
| 13 | A | 1,5 | dto. | 1 | 2,62 |
| 14 | A | 3,0 | dto. | 1 | 1,75 |
| 15 | E | 3,0 | dto. | 1 | 1,62 |

Tabelle 5

Copolymerisation in Xylol bei 80°C, Monomerenzulaufverfahren, Starter AIBN zudosiert.

| | Monomere | | | | Copolymerisat |
|---|---|---|---|---|---|
| Beispiel | N-haltiges Olefin | mol | Fettalkohol-Acrylat | mol | Spezifische Viskosität 10 %-ig in Xylol, 25°C |
| 16 | A | 0,66 | Behenylacrylat (70 % $C_{22}$) | 1 | 1,47 |
| 17 | A | 1,0 | dto. | 1 | 1,22 |
| 18 | A | 1,5 | dto. | 1 | 1,18 |
| 19 | A | 3,0 | dto. | 1 | 1,06 |
| 20 | E | 3,0 | dto. | 1 | 1,55 |
| 21 | A | 9,0 | dto. | 1 | 1,25 |

Tabelle 6

Copolymerisation in Xylol bei 80°C, Eintopfverfahren, Starter AIBN zudosiert.

| Beispiel | Monomere N-haltiges Olefin | mol | Fettalkohol-Acrylat | mol | Copolymerisat Spezifische Viskosität 10 %-ig in Xylol, 25°C |
|---|---|---|---|---|---|
| 22 | A | 0,66 | Behenylacrylat (~45 % $C_{22}$) | 1 | 2,45 |
| 23 | A | 1,0 | dto. | 1 | 1,84 |
| 24 | A | 3,0 | dto. | 1 | 1,75 |
| 25 | A | 0,66 | Behenylacrylat (~70 % $C_{22}$) | 1 | 4,02 |
| 26 | A | 1,0 | Behenylmethacrylat (~70 % $C_{22}$) | 1 | 4,21 |
| 27 | A | 1,0 | Behenylacrylat (~98 % $C_{22}$) | 1 | 2,08 |
| 28 | A | 3,0 | Stearylacrylat | 1 | 2,85 |

Tabelle 7

Copolymerisation in Xylol bei 80°C, Eintopfverfahren, Starter AIBN zudosiert.

| | Monomere | | | | Copolymerisat |
|---|---|---|---|---|---|
| Beispiel | N-haltiges Olefin | mol | Fettalkohol-Acrylat | mol | Spezifische Viskosität 10 %-ig in Xylol, 25°C |
| 29 | M | 1,00 | Behenylacrylat (~45 % $C_{22}$) | 1 | 0,72 |
| 30 | M | 0,66 | dto. | 1 | 0,86 |
| 31 | M | 0,33 | dto. | 1 | 1,04 |

Zur Prüfung der Eignung der erfindungsgemäß einzusetzenden Copolymeren als Verlaufmittel wurden diese in folgenden Pulverlacksystemen getestet.

1. Epoxid-Lack

Eine Pulverlackzusammensetzung aus 22,5 Gew.-Teilen Titandioxid, 96,4 Gew.-Teilen eines Epoxidharzes I, 18,8 Gew.-Teilen eines Epoxidharzes II und 2,3 Gew.-Teilen Dicyandiamid wurde unter Zusatz von 0,5 Gew.-% des zu prüfenden Verlaufmittels der Erfindung vermischt; die Mischung wurde anschließend

extrudiert, granuliert, vermahlen und gesiebt. Die erhaltenen Pulverlacke wurden elektrostatisch auf eine Metalloberfläche gebracht und 12 min bei 180°C eingebrannt. Die eingesetzten Epoxidharze waren handelsübliche Produkte auf Basis von Bisphenol A und Epichlorhydrin mit den folgenden Kenndaten:

| | I | II |
|---|---|---|
| Epoxid-Äquivalentgewicht (g Harz mit 1 Mol Epoxid) | 850-940 | 450-500 |
| Ester-Äquivalentgewicht (g Harz zur Veresterung von 1 Mol Monocarbonsäure) | 179 | 149 |
| Hydroxylwert (g Harz mit 1 Mol Hydroxyl) | 0,33 | 0,26 |

Die Verlaufmittel gemäß den Beispielen 13, 14, 15, 18, 19 und 20 zeigten ausgezeichnete Ergebnisse bei guter Substratbenetzung, Kraterfreiheit des Lackes und einen guten Verlauf der Lackierung.

2. Polyester-Lack

Analog zu der unter 1 beschriebenen Weise wurde aus 55,3 Gew.-Teilen eines Polyesterharzes mit freien Carboxylgruppen, 40,0 Gew.-Teilen Titandioxid und 4,2 Gew.-Teilen Triglycidylisocyanurat unter Zusatz von 0,5 Gew.-% Verlaufmittel ein Pulverlack hergestellt und auf eine Metalloberfläche appliziert.

Das Polyesterharz wies die folgenden Kenndaten auf:

| | |
|---|---|
| Erweichungspunkt (Kofler) | 77-87°C |
| Glasumwandlungstemperatur | 55-60 |
| Schmelzviskosität DIN 53229, 160°C, Kegelplatte | 30-60 Pa.s |
| Säurezahl DIN 53402 | 30-36 mg KOH/g |

Die Einbrennbedingungen waren 5 min bei 200°C, 8 min bei 180°C oder 17 min bei 165°C (die angegebenen Temperaturen beziehen sich jeweils auf die Objekttemperatur).

Unter den Prüfbedingungen ergaben die Verlaufmittel gemäß den Beispielen 1, 14, 15, 24 und 29 einen einwandfreien Verlauf bei störungsfreier Oberfläche. Ohne Verlaufmittel wurde eine schlechte Lackqualität bei starker Fischaugenbildung und vereinzelten Kratern erhalten.

**Patentansprüche**

1. Verwendung von Copolymeren von langkettigen Alkylacrylaten mit N-haltigen Olefinen, erhältlich durch Copolymerisation von

   a) Acrylaten der Formel I

   $CH_2 = CR^1\text{-}CO\text{-}OR^2$ (I)

   in der $R^1$ ein Wasserstoffatom oder eine Methylgruppe und $OR^2$ der Rest eines Fettalkohols mit 16 bis 34 Kohlenstoffatomen bedeuten, mit N-haltigen Olefinen

   $b_1$) der Formel II

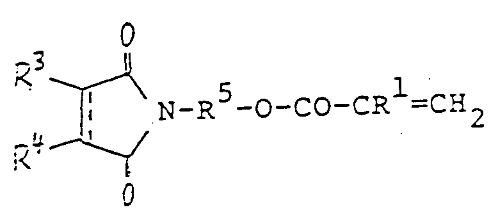

(II)

   in der $R^3$ und/oder $R^4$ Wasserstoff oder $C_1$-$C_4$-Alkylgruppen sind oder zusammen einen gegebenenfalls aromatischen und gegebenenfalls mit $C_1$-$C_4$-Alkyl-substituierten $C_5$- oder $C_6$-Ring bilden können,

   $R^5$ eine geradkettige oder verzweigte Alkylengruppe mit 1 bis 12 Kohlenstoffatomen, die das Strukturelement

$-CH_2-CH_2-O-CH_2-CH_2-$ bzw.
$-CH_2-CH_2-NH-CH_2-CH_2-$ oder

eine cyclische $C_5$- oder $C_6$-Alkylengruppe aufweisen kann oder eine gegebenenfalls $C_1$-$C_4$-Alkylen-substituierte Phenylengruppe ist,
und $R^1$ wie oben definiert ist, wobei die Bindung

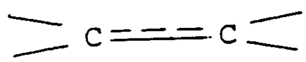

hydriert sein kann,
und/oder
$b_2$) der Formel III

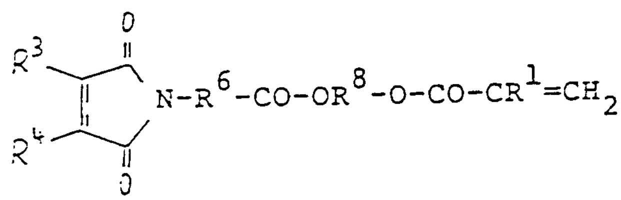
(III)

in der
$R^1$, $R^3$ und $R^4$ wie oben definiert sind,
$R^6$ einen Phenylenrest oder eine Alkylengruppe der Formel

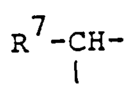

in der $R^7$ ein Wasserstoffatom oder ein gegebenenfalls verzweigter Alkylrest mit 1 bis 11 Kohlenstoffatomen ist, und
$R^8$ eine $C_2$-$C_{10}$-Alkylengruppe sowie die Bindung

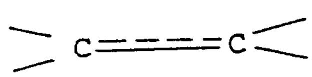

hydriert sein kann,
bedeuten,
und/oder
$b_3$) der Formel IV

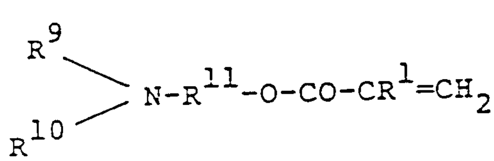
(IV)

in der
$R^1$ wie oben definiert ist, $R^9$ eine Phenyl- oder Benzylgruppe, $R^{10}$ eine $C_1$-$C_{16}$-Alkylgruppe und $R^{11}$ eine $C_2$-$C_6$-Alkylengruppe,

oder
$R^9$ und $R^{10}$ $C_1$-$C_{16}$-Alkylgruppen und $R^{11}$ eine Phenylengruppe bedeuten,
und/oder
$b_4$) der Formel V

$R^{12}$-CO-NH-$R^{13}$-O-CO-C$R^1$ = $CH_2$ (V)

in der $R^{12}$ eine $C_7$-$C_{33}$-, insbesondere $C_{15}$-$C_{23}$-Alkylgruppe und $R^{13}$ eine $C_2$-$C_4$-Alkylengruppe bedeuten und $R^1$ wie oben definiert ist,
in Molverhältnissen von I, II, III, IV bzw. V von 1 : 0,5 bis 1 : 10, vorzugsweise 1 : 2 bis 1 : 5, in Anwesenheit von inerten organischen Lösemitteln und radikalischen Polymerisationsinitiatoren, als Verlaufmittel für Pulverlacke.

**2.** Verwendung von Copolymeren nach Anspruch 1, erhältlich durch eine Copolymerisation von Acrylaten der Formel I, in der $R^1$ Wasserstoff und $R^2$ der Rest eines Fettalkohols mit 16 bis 24 Kohlenstoffatomen ist.

**3.** Verwendung von Copolymeren nach Anspruch 1 oder 2, dadurch gekennzeichnet, daß die Gruppe

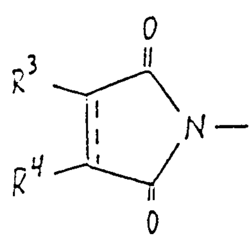

der N-haltigen Olefine gemäß Formel II oder III ein Phthalimidrest ist.

**4.** Verwendung von Copolymeren nach Anspruch 1 oder 2, dadurch gekennzeichnet, daß die Gruppe $R^5$ der N-haltigen Olefine gemäß Formel II eine geradkettige oder verzweigte Alkylengruppe mit 1 bis 6 Kohlenstoffatomen ist.

**5.** Verwendung von Copolymeren nach Anspruch 1 oder 2, dadurch gekennzeichnet, daß die Gruppe $R^6$ der N-haltigen Olefine gemäß Formel III eine Methylengruppe oder eine $C_1$-$C_5$-monoalkyl-substituierte Ethylengruppe ist.

**6.** Verwendung von Copolymeren nach Anspruch 1 oder 2, dadurch gekennzeichnet, daß die Gruppe $R^8$ der N-haltigen Olefine gemäß Formel III eine $C_2$-$C_4$-Alkylengruppe ist.

**7.** Verwendung von Copolymeren nach Anspruch 1 oder 2, dadurch gekennzeichnet, daß in den N-haltigen Olefinen gemäß Formel IV $R^9$ eine Phenyl- oder Benzylgruppe, $R^{10}$ eine $C_1$-$C_4$-Alkylgruppe und $R^{11}$ eine $C_2$-$C_6$-Alkylengruppe ist.

**8.** Verwendung von Copolymeren nach Anspruch 1 oder 2, dadurch gekennzeichnet, daß in den N-haltigen Olefinen gemäß Formel IV $R^9$ und $R^{10}$ $C_1$-$C_4$-Alkylgruppen und $R^{11}$ eine Phenylengruppe sind.

**9.** Verwendung von Copolymeren nach Anspruch 1 oder 2, dadurch gekennzeichnet, daß in den N-haltigen Olefinen gemäß Formel V $R^{12}$ eine $C_{15}$-$C_{23}$-Alkylgruppe ist.

**10.** Verwendung von Copolymeren nach Anspruch 1 oder 2, erhältlich durch Copolymerisation von Acrylaten der Formel VI

$CH_2$ = CH-CO-O$R^{14}$ (VI)

in der $OR^{14}$ der Rest eines Fettalkohols mit 16 bis 24 Kohlenstoffatomen ist, mit einem N-haltigen Olefin der Formel VII

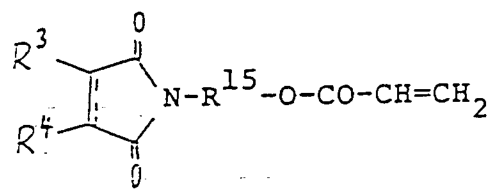

(VII)

in der die Gruppe

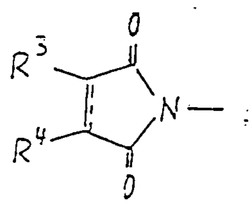

bzw. die Substituenten $R^3$ und $R^4$ wie oben definiert sind und $R^{15}$ ein Alkylenrest mit 2 bis 8, insbesondere 2 bis 3 Kohlenstoffatomen ist,
in Molverhältnissen der Verbindungen VI zu VII von 1 : 0,5 bis 1 : 10.

**11.** Verwendung von Copolymeren nach Anspruch 1 oder 2, erhältlich durch Copolymerisation eines Acrylats der Formel VI gemäß Anspruch 10, in der $OR^{14}$ der Rest eines Fettalkohols mit 16 bis 24 Kohlenstoffatomen ist, mit einem N-haltigen Olefin der Formel VIII

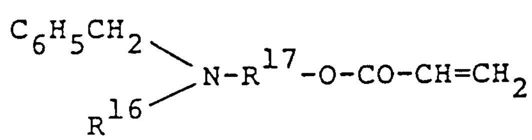

(VIII)

in der $R^{16}$ eine $C_1$-$C_4$-Alkylgruppe und $R^{17}$ eine Ethylengruppe ist, in Molverhältnissen der Verbindungen VI zu VIII von 1 : 0,5 bis 1 : 10.

**12.** Pulverlacke, enthaltende thermoplastische oder duromere Kunstharze und, bezogen auf das Gesamtgewicht der Pulverlacke, 0,1 bis 2,0 Gew.-% eines oder mehrere der gemäß mindestens einem der Ansprüche 1 bis 11 zu verwendenden Copolymeren sowie gegebenenfalls übliche Additive wie Härtungsmittel, Härtungsbeschleuniger, Pigmente und UV-Stabilisatoren.

## Claims

**1.** The use of copolymers of long-chain alkyl acrylates with N-containing olefins obtainable by copolymerization of

a) acrylates corresponding to formula I

$CH_2 = CR^1\text{-}CO\text{-}OR^2$ (I)

in which $R^1$ is a hydrogen atom or a methyl group and $OR^2$ is the residue of a $C_{16-34}$ fatty alcohol, with N-containing olefins corresponding

$b_1$) to formula II

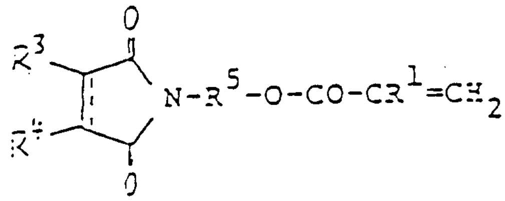

(II)

in which $R^3$ and/or $R^4$ are hydrogen or $C_{1-4}$ alkyl groups or may together form an optionally aromatic and optionally $C_{1-4}$-alkyl-substituted $C_5$ or $C_6$ ring, $R^5$ is a linear or branched $C_{1-12}$ alkylene group which may contain the structural element

$-CH_2-CH_2-O-CH_2-CH_2-$ or
$-CH_2-CH_2-NH-CH_2-CH_2-$

or a cyclic $C_5$ or $C_6$ alkylene group
or is an optionally $C_{1-4}$-alkylene-substituted phenylene group,
and $R^1$ is as defined above; the bond

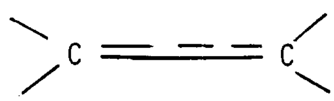

may be hydrogenated,
and/or
$b_2$) to formula III

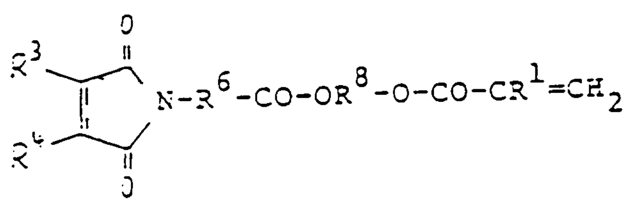

(III)

in which
$R^1$, $R^3$ and $R^4$ are as defined above,
$R^6$ is a phenylene group or an alkylene group corresponding to the formula

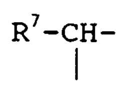

in which $R^7$ is a hydrogen atom or an optionally branched $C_{1-11}$ radical and
$R^8$ is a $C_{2-10}$ alkylene group and the bond

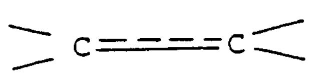

may be hydrogenated,
and/or

$b_3$) to formula IV

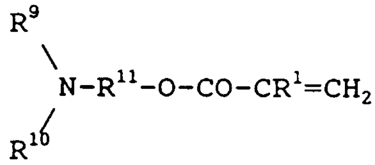 (IV)

in which
$R^1$ is as defined above, $R^9$ is a phenyl or benzyl group,
$R^{10}$ is a $C_{1-16}$ alkyl group and $R^{11}$ is a $C_{2-6}$ alkylene group,
or
$R^9$ and $R^{10}$ are $C_{1-16}$ alkyl groups and $R^{11}$ is a phenylene group,
and/or
$b_4$) to formula V

$R_{12}$-CO-NH-$R^{13}$-O-CO-$CR^1 = CH_2$ (V)

in which $R^{12}$ is a $C_{7-33}$ and more especially $C_{15-23}$ alkyl group and $R^{13}$ is a $C_{2-4}$ alkylene group and $R^1$ is as defined above,

in molar ratios of I to II, III, IV or V of 1:0.5 to 1:10 and preferably 1:2 to 1:5 in the presence of inert organic solvents and radical polymerization initiators,
as flow control agents for powder coatings.

**2.** The use of the copolymers claimed in claim 1 obtainable by copolymerization of acrylates corresponding to formula I in which $R^1$ is hydrogen and $R^2$ is the residue of a $C_{16-24}$ fatty alcohol.

**3.** The use of the copolymers claimed in claim 1 or 2, characterized in that the group

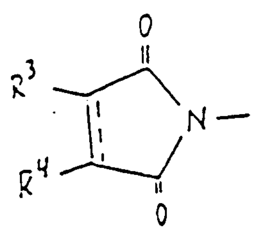

of the N-containing olefins corresponding to formula II or III is a phthalimide group.

**4.** The use of the copolymers claimed in claim 1 or 2, characterized in that the group $R^5$ of the N-containing olefins corresponding to formula II is a linear or branched $C_{1-6}$ alkylene group.

**5.** The use of the copolymers claimed in claim 1 or 2, characterized in that the group $R^6$ of the N-containing olefins corresponding to formula III is a methylene group or a $C_{1-5}$-monoalkyl-substituted ethylene group.

**6.** The use of the copolymers claimed in claim 1 or 2, characterized in that the group $R^8$ of the N-containing olefins corresponding to formula III is a $C_{2-4}$ alkylene group.

**7.** The use of the copolymers claimed in claim 1 or 2, characterized in that, in the N-containing olefins corresponding to formula IV, $R^9$ is a phenyl or benzyl group, $R^{10}$ is a $C_{1-4}$ alkyl group and $R^{11}$ is a $C_{2-6}$ alkylene group.

**8.** The use of the copolymers claimed in claim 1 or 2, characterized in that, in the N-containing olefins corresponding to formula IV, $R^9$ and $R^{10}$ are $C_{1-4}$ alkyl groups and $R^{11}$ is a phenylene group.

**9.** The use of the copolymers claimed in claim 1 or 2, characterized in that, in the N-containing olefins corresponding to formula V, $R^{12}$ is a $C_{15-23}$ alkyl group.

**10.** The use of the copolymers claimed in claim 1 or 2, obtainable by copolymerization of acrylates corresponding to formula VI

$CH_2=CH\text{-}CO\text{-}OR^{14}$ (VI)

in which $OR^{14}$ is the residue of a $C_{16-24}$ fatty alcohol, with an N-containing olefin corresponding to formula VII

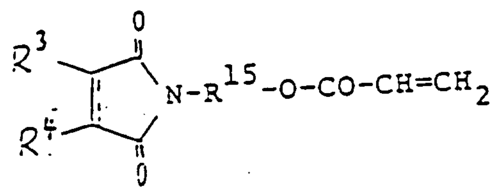

(VII)

in which the group

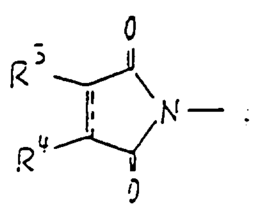

and the substituents $R^3$ and $R^4$ are as defined above and $R^{15}$ is an alkylene radical containing 2 to 8 and more especially 2 to 3 carbon atoms,
in molar ratios of the compounds VI to VII of 1:0.5 to 1:10.

**11.** The use of the copolymers claimed in claim 1 or 2 obtainable by copolymerization of an acrylate corresponding to formula VI in claim 10, in which $OR^{14}$ is the residue of the $C_{16-24}$ fatty alcohol, with an N-containing olefin corresponding to formula VIII

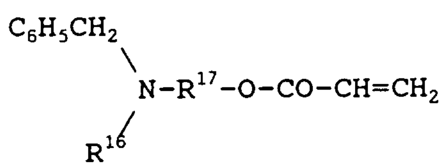

(VIII)

in which $R^{16}$ is a $C_{1-4}$ alkyl group and $R^{17}$ is an ethylene group,
in molar ratios of the compounds VI to VIII of 1:0.5 to 1:10.

**12.** Powder coatings containing thermoplastic or thermoset synthetic resins and, based on the total weight of the powder paints, 0.1 to 2.0% by weight of one or more of the copolymers to be used in accordance with at least one of claims 1 to 11 and, optionally, typical additives, such as hardeners, hardening accelerators, pigments and UV stabilizers.

**Revendications**

**1.** Utilisation de copolymères d'acrylates d'alkyle à longues chaînes avec des oléfines azotées, que l'on peut obtenir par copolymérisation

a) d'acrylates de formule I

$CH_2 = CR^1\text{-}CO\text{-}OR^2$ (I)

dans laquelle $R^1$ représente un atome d'hydrogène ou un groupe méthyle et $OR^2$ représente le radical d'un alcool gras contenant de 16 à 34 atomes de carbone, avec
des oléfines azotées
$b_1$) répondant à la formule II

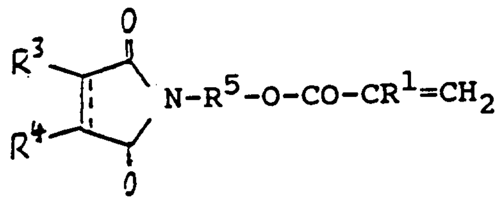

(II)

dans laquelle $R^3$ et/ou $R^4$ représentent un atome d'hydrogène ou des groupes alkyle en $C_1$-$C_4$ ou bien peuvent former ensemble un noyau en $C_5$ ou en $C_6$, éventuellement aromatiques et éventuellement substitués par un groupe alkyle en $C_1$-$C_4$,
$R^5$ représente un groupe alkylène à chaîne droite ou ramifiée contenant de 1 à 12 atomes de carbone, qui peut présenter l'élément de structure

$-CH_2\text{-}CH_2\text{-}O\text{-}CH_2\text{-}CH_2\text{-}$ ou
$-CH_2\text{-}CH_2\text{-}NH\text{-}CH_2\text{-}CH_2\text{-}$

ou encore un groupe alkylène cyclique en $C_5$ ou en $C_6$, ou bien représente un groupe phénylène éventuellement substitué par un groupe alkylène en $C_1$-$C_4$,
et $R^1$ est tel que défini ci-dessus, la liaison

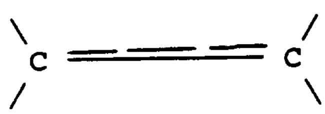

pouvant être hydrogénée,
et/ou
$b_2$) répondant à la formule III

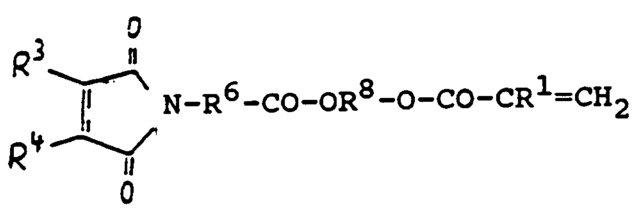

(III)

dans laquelle
$R^1$, $R^3$ et $R^4$ sont tels que définis ci-dessus,
$R^6$ représente un radical phénylène ou un groupe alkylène répondant à la formule

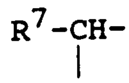

dans laquelle $R^7$ représente un atome d'hydrogène ou un radical alkyle éventuellement ramifié

contenant de 1 à 11 atomes de carbone, et
$R^8$ représente un groupe alkylène en $C_2$-$C_{10}$, la liaison

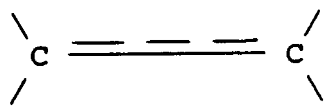

pouvant également être hydrogénée,
et/ou
$b_3$) répondant à la formule IV

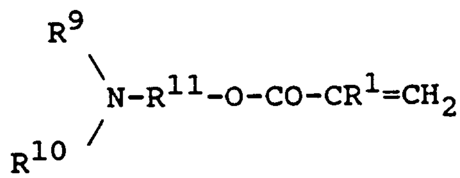

(IV)

dans laquelle
$R^1$ est tel que défini ci-dessus, $R^9$ représente un groupe phényle ou un groupe benzyle, $R^{10}$ représente un groupe alkyle en $C_1$-$C_{16}$ et $R^{11}$ représente un groupe alkylène en $C_2$-$C_6$,
ou
$R^9$ et $R^{10}$ représentent des groupes alkyle en $C_1$-$C_{16}$ et $R^{11}$ représente un groupe phénylène,
et/ou
$b_4$) répondant à la formule V

$R^{12}$-CO-NH-$R^{13}$-O-CO-C$R^1$ = $CH_2$ (V)

dans laquelle $R^{12}$ représente un groupe alkyle en $C_7$-$C_{33}$,en particulier en $C_{15}$-$C_{23}$ et $R^{13}$ représente un groupe alkylène en $C_2$-$C_4$, $R^1$ étant défini comme ci-dessus,
dans des rapports molaires de I : II, III, IV ou V de 1:0,5 à 1:10, de préférence de 1:2 à 1:5, en présence de solvants organiques inertes et d'initiateurs radicalaires de polymérisation, comme agents de nivellement pour des laques, des peintures ou des vernis pulvérulents.

**2.** Utilisation de copolymères selon la revendication 1, que l'on peut obtenir par copolymérisation d'acrylates de formule I dans laquelle $R^1$ représente un atome d'hydrogène et $R^2$ le radical d'un alcool gras contenant de 16 à 24 atomes de carbone.

**3.** Utilisation de copolymères selon la revendication 1 ou 2, caractérisée en ce que le groupe

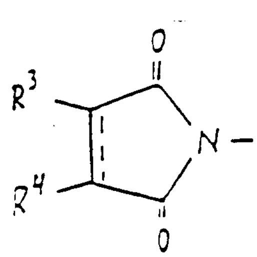

des oléfines azotées selon la formule II ou III représente un radical phtalimide.

**4.** Utilisation de copolymères selon la revendication 1 ou 2, caractérisée en ce que le groupe $R^5$ des oléfines azotées selon la formule II représente un groupe alkylène à chaîne droite ou ramifiée contenant de 1 à 6 atomes de carbone.

**5.** Utilisation de copolymères selon la revendication 1 ou 2, caractérisée en ce que le groupe $R^6$ des oléfines azotées selon la formule III représente un groupe méthylène ou un groupe éthylène substitué par un groupe monoalkyle en $C_1$-$C_5$.

**6.** Utilisation de copolymères selon la revendication 1 ou 2, caractérisée en ce que le groupe $R^8$ des oléfines azotées selon la formule III représente un groupe alkylène en $C_2$-$C_4$.

**7.** Utilisation de copolymères selon la revendication 1 ou 2, caractérisée en ce que, dans les oléfines azotées selon la formule IV, $R^9$ représente un groupe phényle ou un groupe benzyle, $R^{10}$ représente un groupe alkyle en $C_1$-$C_4$ et $R^{11}$ représente un groupe alkylène en $C_2$-$C_6$.

**8.** Utilisation de copolymères selon la revendication 1 ou 2, caractérisée en ce que, dans les oléfines azotées selon la formule IV, $R^9$ et $R^{10}$ représentent des groupes alkyle en $C_1$-$C_4$ et $R^{11}$ représente un groupe phénylène.

**9.** Utilisation de copolymères selon la revendication 1 ou 2, caractérisée en ce que, dans les oléfines azotées selon la formule V, $R^{12}$ représente un groupe alkyle en $C_{15}$-$C_{23}$.

**10.** Utilisation de copolymères selon la revendication 1 ou 2, que l'on peut obtenir par copolymérisation d'acrylates de formule VI

$CH_2 = CH\text{-}CO\text{-}OR^{14}$ (VI)

dans laquelle $OR^{14}$ représente le radical d'un alcool gras contenant de 16 à 24 atomes de carbone, avec une oléfine azotée de formule VII

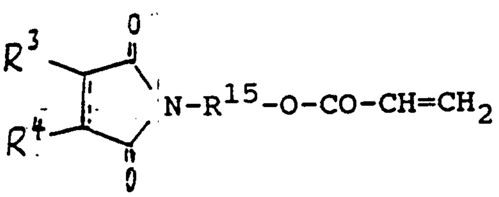

(VII)

dans laquelle le groupe

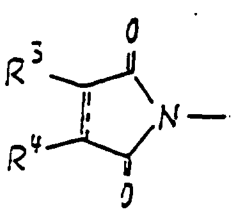

ou les substituants $R^3$ et $R^4$ sont tels que définis ci-dessus et $R^{15}$ représente un radical alkylène contenant de 2 à 8, en particulier de 2 à 3 atomes de carbone dans des rapports molaires des composés VI à VII de 1:0,5 à 1:10.

**11.** Utilisation de copolymères selon la revendication 1 ou 2, que l'on obtient par copolymérisation d'un acrylate de formule VI, selon la revendication 10 dans laquelle $OR^{14}$ représente un radical d'un alcool gras contenant de 16 à 24 atomes de carbone, avec une oléfine azotée de formule VIII :

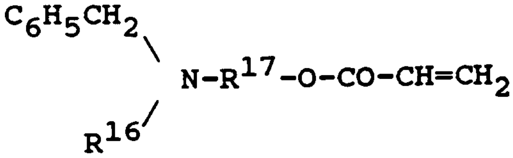

(VIII)

dans laquelle $R^{16}$ représente un groupe alkyle en $C_1$-$C_4$ et $R^{17}$ représente un groupe éthylène, dans des rapports molaires entre les composés VI à VIII de 1:0,5 à 1:10.

**12.** Laques, peintures ou vernis pulvérulents contenant des résines synthétiques, thermoplastiques ou duromères et, rapportés au poids total de la laque, de la peinture ou du vernis pulvérulent, de 0,1 à 2,0% en poids d'un ou de plusieurs des copolymères à utiliser conformément à au moins une des revendications 1 à 11, ainsi qu'éventuellement des additifs habituels tels que des durcisseurs, des accélérateurs du durcissement, des pigments et des stabilisants UV.